# EUROPÄISCHE PATENTSCHRIFT

(11) **EP 1 075 394 B1**
(45) Veröffentlichungstag und Bekanntmachung des Hinweises auf die Patenterteilung: **27.03.2002**
(21) Anmeldenummer: 99923441.2
(22) Anmeldetag: 22.04.1999
(51) Int. Cl.: B60C 19/00

(54) **VERFAHREN ZUM FESTLEGEN EINES RINGES AUS SCHALLABSORBIERENDEM MATERIAL AUF EINER FELGE UND KRAFTFAHRZEUGRAD MIT EINEM AUF EINE FELGE AUFGEBRACHTEN RING AUS SCHALLABSORBIERENDEM MATERIAL**
METHOD FOR FIXING A RING MADE OF A SOUND-ABSORBING MATERIAL ON A RIM AND MOTOR VEHICLE WHEEL HAVING A RING MADE OF SOUND-ABSORBING MATERIAL FIXED ON THE RIM
PROCEDE POUR FIXER UN ANNEAU EN MATERIAU INSONORISANT SUR UNE JANTE ET ROUE DE VEHICULE AUTOMOBILE EQUIPEE D'UN TEL ANNEAU PLACE SUR UNE JANTE

(30) Priorität: 29.04.1998 DE 19819128
(43) Veröffentlichungstag der Anmeldung: 14.02.2001
(73) Patentinhaber: Continental Aktiengesellschaft, 30001 Hannover (DE)
(72) Erfinder: SCHÜRMANN, Oliver, D-30855 Langenhagen (DE); DIECKMANN, Andreas, D-30163 Hannover (DE); STEINER, Anton, D-30169 Hannover (DE); DODT, Thomas, D-31655 Stadthagen (DE); GAUTERIN, Frank, D-31535 Neustadt (DE); FIDAN, Mehmet, Sadettin, D-30827 Garbsen (DE)
(86) Internationale Anmeldenummer: EP9902714
(87) Internationale Veröffentlichungsnummer: WO9955542

(56) Entgegenhaltungen:
- DE-A- 2 946 273
- DE-A- 3 042 350
- DE-A- 4 400 912
- GB-A- 2 013 143

## Beschreibung

Die gegenständliche Erfindung betrifft ein Verfahren zum Festlegen eines Ringes aus schallabsorbierendem Material an dem dem Innenraum eines auf einer Felge montierten Reifens zugewandten Umfangsbereich der Felge. Die Erfindung betrifft ferner ein Kraftfahrzeugrad mit einem auf eine Felge aufgebrachten Reifen, in dessen Innenraum, auf der Felge umlaufend, ein aus schallabsorbierendem Material bestehender Ring untergebracht ist.

Die während des Abrollens eines Reifens entstehenden Reifenschwingungen sind bekannterweise eine der Hauptursachen der als störend empfundenen Lärmabstrahlung von Kraftfahrzeugen. Dabei ist insbesondere die im Reifentorus entstehende Schallleistung sehr hoch, wobei die dort auftretenden Schallschwingungen zum Teil über Kraftfahrzeugteile in den Fahrzeuginnenraum übertragen und zum Teil über die Reifenseitenwände nach außen abgestrahlt werden. Es ist bekannt, dass der Einbau von schallabsorbierenden Materialien im Reifeninnenraum die abgestrahlte Schallleistung reduziert.

So ist beispielsweise aus dem deutschen Patent Nr. DE 29 46 273 C2 eine Einrichtung zur Verringerung des Reifenlärms von Fahrzeugen bekannt, bei der an der Felge schallabsorbierende und offenporige Bauteile angeordnet sind, die von dort ohne Kontakt mit der Reifeninnenfläche in den Innenraum des Reifens ragen.

Die aus der DE 44 00 912 A bekannte Lösung befasst sich damit, eine wirkungsvolle Reduktion der sich im Torusraum ausbildenden Schallwellen unter Bedachtnahme auf eine einfache Montage- und Demontagemöglichkeit zu erzielen. Dazu wird vorgeschlagen, das schalldämmende Material in einen flexiblen Schlauch einzubringen, der auf Grund seiner Flexibilität gemeinsam mit dem Reifen auf der Felge montiert werden kann. Die Ausführung als Schlauch bringt den Vorteil einer leichten Montage mit sich. Bei höheren Geschwindigkeiten, wo die auftretenden Fliehkräfte schon groß sind, sind der relativ lose Sitz dieses Einbaus an der Felge und dessen Gewicht von Nachteil.

Aus dem deutschen Patent DE 30 42 350 C2 ist ferner ein Fahrzeugluftreifen bekannt, dessen Innenflächen ganz oder teilweise mit einem geräuschmindernden Belag aus offenzelligem Schaumstoff ausgekleidet sind. Um eine wirksame Dämpfung des Körperschalls in den physiologisch besonders bedeutsamen Frequenzbereichen zu erzielen, wird dabei vorgeschlagen, einen speziellen, körperschalldämpfenden und vernetzten Polyurethanschaumstoff in einer bestimmten Schichtdicke zu verwenden.

Ein gattungsbildendes Kraftfahrzeugrad ist aus dem GB-A-2 013 143 bekannt.

Offenporiger Schaumstoff ist an und für sich besonders gut geeignet, den Luftschallpegel im Reifeninnenraum zu senken. Dem Fachmann ist dabei eine Reihe von Schaumstoffen bekannt, die den jeweiligen Anforderungen gut gerecht werden. Bei der Auswahl eines geeigneten Schaumstoffes ist dabei auf einen guten Schallabsorptionsgrad, schon bei tiefen Frequenzen, zu achten. Darüber hinaus ist es bekannt, dass auch andere Materialien für die Schallabsorption im Reifeninneren in Frage kommen, beispielsweise schalldämmende Einbauten die aus Watte, Wolle, Fitz oder ähnlichen Materialien bestehen.

Vor allem bei höheren Geschwindigkeiten ist nun die Fliehkraftbeständigkeit von schalldämmenden Einbauten im Reifeninneren von besonderer Bedeutung. Die bekannten Lösungen können diesbezüglich nicht zufrieden stellen, da durch den Einfluss der Fliehkraft insbesondere bei höheren Geschwindigkeiten unerwünschte Veränderungen in den Schallabsorptionseigenschaften in Folge durch im Material eintretende Deformationen sowie auch in Folge von Querschnittsveränderungen der Einbauten auftreten. Das schallabsorbierende Material sollte daher auch ein möglichst geringes Gewicht besitzen.

Hier setzt nun die Erfindung ein, deren Aufgabe darin besteht, eine Möglichkeit der Festlegung oder der Befestigung eines insbesondere aus Schaumstoff bestehenden, schallabsorbierenden Einbaus an der Felge vorzuschlagen, die praktisch ohne oder nur mit unwesentlicher Erhöhung des Gewichtes des schalldämmenden Einbaus die erwünschte Fliehkraftbeständigkeit gewährleistet.

Was das erfindungsgemäße Verfahren betrifft, wird diese Aufgabe dadurch gelöst, dass der Ring aus schallabsorbierendem Material von Fäden umspannt wird, welche seitlich des Ringes in Richtung zur oder an die Felge gespannt werden.

Bezüglich des erfindungsgemäßen Fahrzeugrades besteht die Lösung der gestellten Aufgabe darin, dass der Ring aus schallabsorbierendem Material mittels ihn umspannenden Fäden, die zu beiden Seiten des Ringes in Richtung zur oder an die Felge gespannt sind, an der Felge festgelegt ist.

Die den schalldämmenden Einbau im Reifen umspannenden Fäden verhindern wirkungsvoll unerwünschte bzw. ungünstige Deformationen des schallabsorbierenden Materials und sind gleichzeitig in der Lage, auch bei hohen Geschwindigkeiten den schallabsorbierenden Einbau in seiner Lage an der Felge zu halten. Die Erfindung ermöglicht zudem, schallabsorbierende Einbauten unterschiedlicher Querschnittsformen an der Felge festzulegen.

Zur Sicherstellung einer guten Fliehkraftbeständigkeit ist es dabei von Vorteil, wenn die Fäden in zumindest im Wesentlichen radialer sowie in axialer Richtung oder, bezüglich der Umfangsrichtung der Felge, bis zu diagonaler Richtung verlaufend orientiert sind.

Gemäß einer bevorzugten Ausführungsform der Erfindung sind diese Fäden die Schussfäden eines Gewebes oder eines gewebeähnlichen Gebildes, das im Bereich seiner Ränder jeweils mit zumindest einem Kettfaden versehen ist. Ein derart einfacher Aufbau ist durchaus ausreichend, um den schallabsorbierenden Ring fliehkraftbeständig an der Felge festzulegen.

Gerade bei dieser Ausführungsform kann die Festlegung dadurch besonders einfach gestaltet werden, dass diese Kettfäden zuziehbare Befestigungsfäden, insbesondere aus Kunststoff oder Stahl, sind.

Dabei gibt es eine Vielzahl von Möglichkeiten, die einander zugeordneten Enden der Befestigungsfäden zu verbinden, wobei vor allem Verknoten, Verkleben, Verpressen, Verschweißen oder Vernähen in Frage kommen.

Um den schallabsorbierenden Ring gegen ein Verrutschen zu sichern, ist es meist ausreichend, wenn die Befestigungsfäden gegen ein Verrutschen aus ihrer Position an der Felge gesichert werden.

Eine einfache Möglichkeit einer Sicherung gegen Verrutschen sieht vor, dass an der Felge Streifen, Profile oder dergleichen aus Gummi oder Kunststoff angebracht sind, wo die Befestigungsfäden gespannt werden. Alternativ dazu können an der Felge Nuten vorgesehen werden, die zur Aufnahme der Befestigungsfäden vorgesehen sind.

Bei einer weiteren Ausführungsform der Erfindung können die Befestigungsfäden selbst rutschsicher ausgerüstet, insbesondere gummiert, sein.

Bei einer weiteren Ausführungsvariante der Erfindung sind die schallabsorbierenden, den Ring umspannenden Fäden beidseitig des Ringes an der Felge festgeklemmt. Auch hier handelt es sich um eine Ausführungsform, die relativ einfach gehandhabt werden kann.

Um das Festklemmen der Fäden zu erleichtem, können diese in insbesondere aus Gummi bestehenden Randstreifen oder dergleichen gehalten sein. In diesem Fall wird vorteilhafter Weise jeweils der Randstreifen beidseitig des schallabsorbierenden Ringes an der Felge festgeklemmt.

Auch bei dieser Ausführungsvariante ist es günstig, weitere Maßnahmen gegen ein unbeabsichtigtes Verrutschen vorzusehen. Zu diesem Zweck können die Fäden oder die Randstreifen auf Gummiprofilen, die mit der Felge verbunden sind, festgeklemmt werden. Als zusätzliche, ein Verrutschen behindernde Maßnahme können dabei diese Gummiprofile mit umlaufenden Nuten, wo das Festklemmen der Randstreifen oder Fäden erfolgt, versehen werden.

Das Festklemmen selbst kann auf einfache Weise mittels Spanneinrichtungen, wie spannbaren Bändern oder dergleichen, erfolgen.

Bei sämtlichen Ausführungsvarianten kann zur Erleichterung des Hantierens mit dem Gewebe bzw. Gebilde dieses mit zusätzlichen, in Umfangsrichtung umlaufenden Fäden versehen werden.

Bei einer weiteren Maßnahme, die ein Hantieren erleichtert, ist vorgesehen, dass die Fäden bzw. das diese aufweisende Gebilde mit dem schallabsorbierenden Ring, vor dem Aufbringen desselben auf die Felge, verklebt werden.

Bei einer weiteren Ausführungsform der Erfindung sind die den Ring umspannenden Fäden Bestandteile eines dichten, jedoch akustisch transparenten Gewebes.

In diesem Fall kann auf gesonderte Spanneinrichtungen verzichtet werden, indem das Gewebe durch, insbesondere infolge Befeuchtens, schrumpfbare Fäden in Richtung zur oder an die Felge gespannt wird. Dies erleichtert die Handhabung, da kein gesondedes Befestigen des Gewebes mehr an der Felge erforderlich ist.

Bei einer bevorzugten Ausführungsform können dabei die schrumpfbaren Fäden zumindest in den Randbereichen des Gewebes und dort in Umfangsrichtung verlaufend eingewoben sein.

Bei einer alternativen Ausführungsform ist vorgesehen, dass die schrumpfbaren Fäden in an den in Umfangsrichtung verlaufenden Rändern ausgebildeten Taschen des Gewebes untergebracht sind. Bei einer Ausführung mit eingewobenen schrumpfbaren Fäden wird die Herstellung des Gewebes etwas aufwendiger, bei der zweiten Ausführungsform ist der Aufwand zur Herstellung der Taschen und Unterbringung der Fäden bei einfach aufgebauten Gewebe nachträglich etwas größer.

Bei einer weiteren alternativen Ausgestaltung des Gewebes kann vorgesehen werden, dass dieses selbst zumindest zum Teil aus schrumpfbaren Fäden gebildet ist. Dabei kann auch das gesamte Gewebe aus schrumpfbaren Fäden hergestellt sein.

Die Handhabung eines Gewebes mit schrumpfbaren Fäden ist insbesondere dann auch besonders einfach, wenn dieses in vorgefertigter ringartig geschlossener Form auf den auf der Felge positionierten schallabsorbierenden Ring aufgebracht wird.

Als Material für die schrumpfbaren Felgen eignen sich beispielsweise Fäden aus PVA.

Gemäß einer besonders bevorzugten Ausführungsform der Erfindung ist der schallabsorbierende Ring ein offenporiger Schaumstoffring. Schaumstoff ist sowohl von den Schallabsorptionseigenschaften her als auch von seinem Gewicht her besonders gut geeignet.

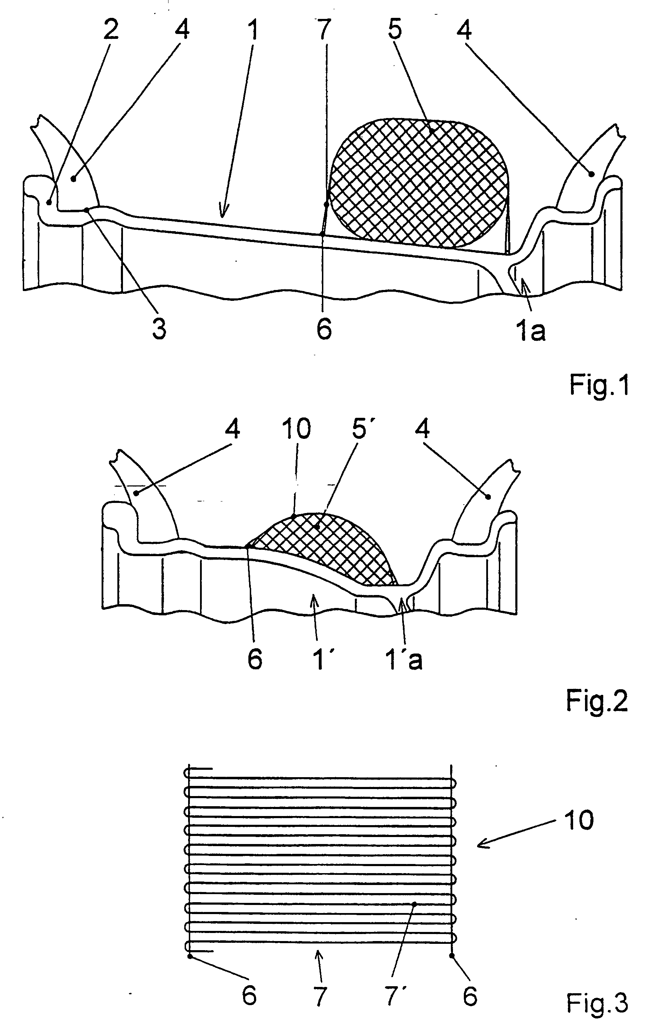

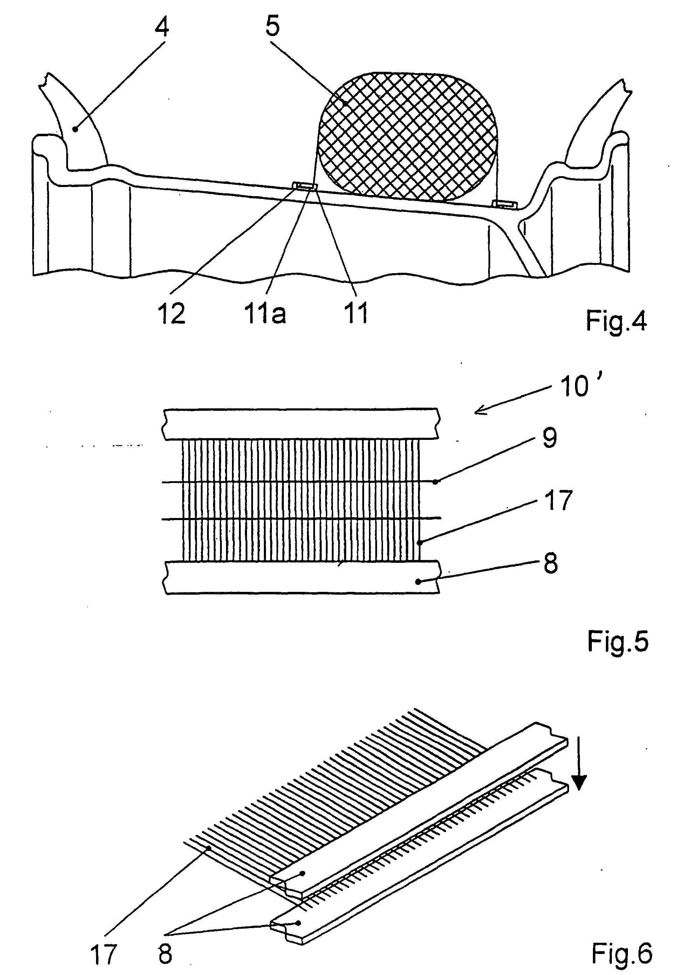

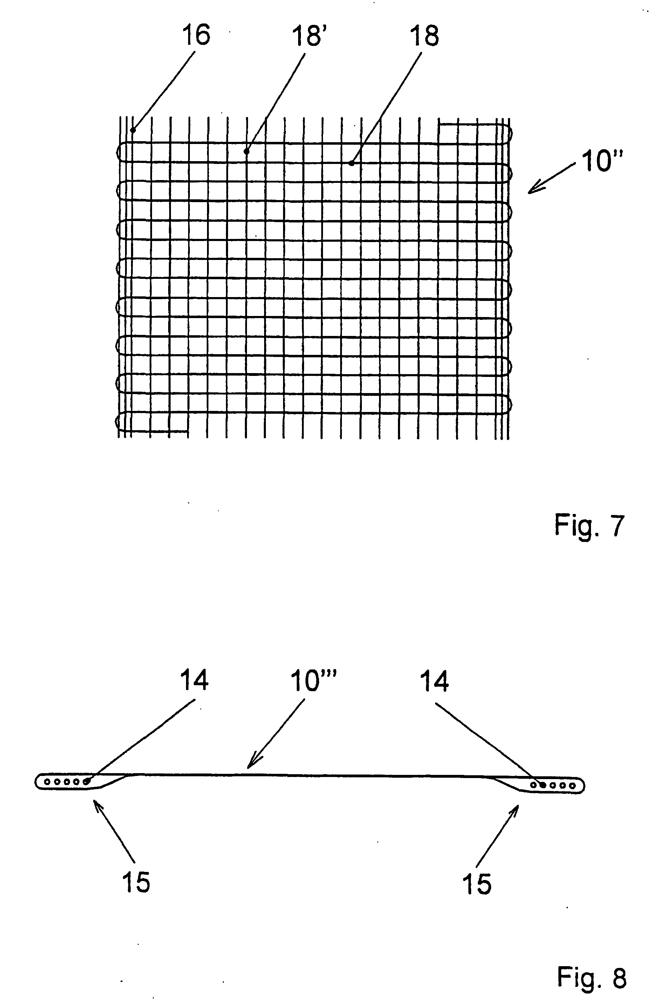

Weitere Merkmale, Vorteile und Einzelheiten der Erfindung werden nun anhand der Zeichnung, die mehrere Ausführungsbeispiele darstellt, näher beschrieben. Die Zeichnungsfiguren sind dabei schematische Darstellungen und zeigen: Fig. 1 einen Teilquerschnitt durch eine Felge mit angedeutetem Reifen und mit einer ersten Ausführungsform der Erfindung, Fig. 2 in analoger Darstellung zu Fig. 1 eine zweite Ausführungsform der Erfindung, Fig. 3 eine Draufsicht auf einen Abschnitt eines Gewebes wie es bei den Ausführungsformen gemäß Fig. 1 und Fig. 2, vorgesehen ist, Fig. 4 in analoger Darstellung zu Fig. 1 ein weiteres Ausführungsbeispiel der Erfindung, Fig. 5 eine Ansicht eines Teiles des zur Befestigung des schallabsorbierenden Einbaus gemäß Fig. 4 vorgesehenen Gebildes, Fig. 6 verdeutlicht die Ausführung der Randkanten des Gebildes aus Fig. 5, Fig. 7 und Fig. 8 zeigen weitere Ausführungsvarianten mit Gewebe, wobei Fig. 7 eine Draufsicht auf ein Gewebe und Fig. 8 eine Seitenansicht eines Gewebes sind.

Fig. 1 zeigt einen Querschnitt durch einen Teilbereich einer Felge 1, wo diese mit Felgenhörnern 2 und Sitzflächen 3 für die Wulstbereiche 4 eines ansonsten nicht dargestellten Reifens versehen ist. Die dargestellte Felge 1 ist von ihrer Ausgestaltung her eine jener Felgen für PKW-Reifen, die ein Tiefbett 1a besitzen, - das durch einen schrägen Verlauf des Felgenbereiches zwischen den beiden Wulstsitzbereichen gebildet wird. Dabei wird darauf verwiesen, dass die gegenständliche Erfindung weder auf einen bestimmten Typ Luftreifen, noch auf einen bestimmten Typ Felge eingeschränkt ist.

Bei dem in Fig. 1 dargestellten ersten Ausführungsbeispiel der Erfindung sitzt auf der Felge 1 ein Ring 5 aus schallabsorbierendem Material, insbesondere aus einem für eine Luftschallabsorbtion im Innenraum von Reifen geeigneten, offenporigen Schaumstoff, beispielsweise einem PU-Schaum oder einem Melaminharzschaum. Als Alternativmaterialien zu Schaumstoff kommen auch andere, Luftschall gut absorbierende Materialien in Frage, beispielsweise Filz, Watte und Materialien ähnlicher Struktur und ähnlichen Aufbaus. In weiterer Folge wird nun zur Erläuterung der einzelnen Ausführungsbeispiele der Erfindung jeweils auf einen Schaumstoffring Bezug genommen. Die gegenständliche Erfindung ist jedoch, wie erwähnt, nicht auf die Verwendung von Schaumstoffen eingeschränkt.

Der dargestellte Schaumstoffring 5 besitzt insbesondere einen ovalen bzw. im Wesentlichen ovalen Querschnitt und ist auf der Felge 1 an deren Tiefbettbereich so positioniert, dass eine Montage des Reifens auf der Felge 1 mit aufgebrachtem Ring 5 möglich ist. Auch von seinem Volumen bzw. seiner Querschnittsfläche her wird der Schaumstoffring 5 derart ausgelegt, dass er bei der Montage des Reifens auf der Felge 1 nicht hinderlich ist. Hier wäre auch ein Schaumstoffring mit halbkreisförmigem Querschnitt gut einsetzbar. Von Vorteil ist ferner, den Querschnitt des Schaumstoffringes an die Felgenkontur anzupassen.

Selbstverständlich können im Rahmen der gegenständlichen Erfindung Schaumstoffringe unterschiedlichsten Querschnitts eingesetzt werden, wie sich aus der nachfolgenden Beschreibung noch ergibt, ist dies einer der Vorteile der gegenständlichen Erfindung.

Bei luftschallabsorbierenden Einbauten im Reifen ist neben dem Ermöglichen der Montage des Reifens auch von besonderer Bedeutung, dass diese Einbauten ein möglichst geringes Gewicht besitzen und dass sichergestellt ist, dass sich das schallabsorbierende Material in Folge der beim Abrollen des Reifens, insbesondere bei höheren Geschwindigkeiten, deutlich bemerkbar machenden Fliehkräfte möglichst nicht oder nur wenig deformiert. Die geforderte Fliehkraftbeständigkeit eines solchen schallabsorbierenden Einbaus soll gewährleisten, dass sich im Betrieb, also beim Abrollen des Reifens bzw. Fahrzeugrades, die erwünschten Schallabsorptionseigenschaften, auf die der schallabsorbierende Einbau von vorne herein ausgelegt wird, möglichst nicht oder nur unwesentlich ändern. Darüber hinaus soll gewährleistet sein, dass auch die anderen Reifeneigenschaften, beispielsweise der Rundlauf, möglichst nicht beeinträchtigt werden.

Auf Grund dieser Anforderungen ist demnach die Art und Weise, wie ein solcher Schaumstoffring 5 auf der Felge 1 fixiert wird, von großer Bedeutung. Gemäß der gegenständlichen Erfindung wird der Schaumstoffring 5 durch ihn umspannende Fäden an der Felge 1 festgelegt und vor Deformationen, auch bei hohen Fliehkräften, bewahrt.

Bei einer ersten Ausführungsform der Erfindung sind diese Fäden 7' die Schussfäden eines Gewebes 10, dessen Ausgestaltung Fig. 3 entnommen werden kann. Das Gewebe 10 besitzt zumindest zwei als Befestigungsfäden 6 bezeichnete Kettfäden. Um diese Befestigungsfäden 6 wird ein Faden 7, und zwar einmal um den einen Befestigungsfaden 6 und einmal um den anderen Befestigungsfaden 6 und wieder zurück, so lange gewickelt, bis das eher lose Gewebe 10 entsteht. Der zwischen den Befestigungsfäden 6 und den Fäden 7 gebildete Winkel wird insbesondere zwischen 45 und 90 ° gewählt. Die Anzahl dieser Wicklungen des Fadens 7, der Abstand der beiden Befestigungsfäden 6 sowie die Längenabmessung des so gebildeten Gewebes 10 werden dabei an die Abmessungen des Schaumstoffringes 5 angepasst. Der Abstand der beiden Befestigungsfäden 6 wird so gewählt, dass diese an der Felge 1, auf dieser anliegend, unter Spannung festgezogen werden können. Die Länge der Befestigungsfäden 6 wird insbesondere größer gewählt als der äußere Umfang der Felge 1 in jenem Bereich, wo der Sitz für den Schaumstoffring 5 vorgesehen ist.

Der Schaumstoffring 5 wird vor der Montage des Reifens über die Felge 1 gezogen und in der gewünschten Lage positioniert. Anschließend wird das in der beschriebenen Weise erstellte Gewebe 10 über den Schaumstoffring 5 gelegt und es werden die einander zugehörigen Enden der beiden Befestigungsfäden 6 festgezogen und miteinander verbunden. Dies sollte unter gleichzeitigem Aufbringen einer gewissen Spannung vor sich gehen, wobei die Enden der Befestigungsfäden 6 durch einfaches Verknoten miteinander verbunden werden können. Alternativ oder zusätzlich kann Verkleben, Verpressen über geeignete verpressbare Hülsen oder dergleichen, Verschweißen, Zusammenfügen mittels Haken, Vernähen etc. in Betracht gezogen werden.

Um ein seitliches Verrutschen des derart an der Felge 1 montierten Schaumstoffringes 5 in jedem Fall sicher zu verhindern, kann vorgesehen werden, dass die Befestigungsfäden 6 in an der Felge 1 ausgefräste oder bereits bei der Herstellung der Felge mitgebildete (mitgepresste) Nuten eingreifen oder durch entsprechende Anlagekanten oder dergleichen an der Felge 1 gehalten werden.

Alternativ dazu können an der Felge 1 Streifen oder Profile aus Gummi oder Kunststoff angebracht werden, beispielsweise angeklebt werden, die ein Verrutschen der Befestigungsfäden verhindern. Dabei besteht auch die Möglichkeit, die Befestigungsfäden 6 selbst rutschsicher auszurüsten, indem diese gummiert werden.

Das Hantieren mit dem Schaumstoffring 5 und dem zum Festlegen und Halten desselben an der Felge 1 vorgesehenen Gewebe 10 kann bei einer weiteren Ausführungsform der Erfindung dadurch vereinfacht werden, dass das Gewebe 10 und der Schaumstoffring 5 miteinander vorab durch Kleben verbunden werden. In diesem Fall kann der Schaumstoffring 5 als offener Ring vor der Montage des Reifens auf der Felge 1 positioniert und an seinen Fügestellen bzw. Stirnflächen ebenfalls durch Kleben oder dergleichen verbunden werden.

Um das Hantieren mit dem Gewebe 10 zu erleichtern, kann zusätzlich vorgesehen werden, weitere in Richtung der Befestigungsfäden 6 umlaufende Fäden mit dem Gewebe zu verbinden bzw. in das Gewebe 10 einzuweben. Hier reicht es aus, wenn zwischen diesen zusätzlichen Kettfäden ein Abstand von einigen Zentimetern bestehen bleibt, um eine leichtere Handhabung zu ermöglichen.

Als Material für-die-Befestigungsfäden-6-und-die-gegebenenfalls weiteren Kettfäden kommen Kunstfaserfäden, für die Befestigungsfäden 6 auch Stahlfilamente, in Frage. Der die Schussfäden 7' bildende Faden 7 kann aus einem textilen Material, wie Nylon, Rayon, Polyester oder einem Aramid, bestehen.

Bei der in Fig. 2 dargestellten Ausführungsform ist die Felge 1' mit einem ausgeprägten Tiefbett 1'a versehen. Hier kann der Schaumstoffring 5' so gestaltet werden, dass er bis in das Tiefbett 1'a hinein reicht und von seinem Querschnitt, von seiner Anlagefläche an der Felge 1' her, an die dortige Kontur angepasst wird. Ansonsten kann der Schaumstoffring 5' analog zur Ausführungsform gemäß Fig. 1 ausgeführt und mit einem Gewebe 10 der beschriebenen Art und Weise an der Felge 1' festgelegt werden.

Eine zweite mögliche Ausführungsform für ein Gebilde 10' zur Festlegung bzw. Befestigung eines Schaumstoffringes 5 an einer Felge 1 wird nun anhand der Figuren 4 bis 6 näher beschrieben. Die Ausgestaltung der Felge 1 und des Schaumstoffringes 5 entsprechen dabei jener gemäß Fig.1. Wie Fig. 5 zeigt, besteht auch hier das Gebilde 10' aus der Querrichtung der Felge 1 bzw. des Reifens zugeordneten textilen Fäden 17 aus dem oben erwähnten Material. Auch hier können die zumindest im Wesentlichen parallel zueinander verlaufenden Fäden 17 durch ein fortlaufendes Umlenken eines Einzelfadens in einem entsprechenden Abstand um jeweils 180 ° gebildet werden oder es können Einzelfäden entsprechender Länge als Ausgangsmaterial herangezogen werden. Die Fäden 17 können dabei auch diagonal bzw. schräg zur Querrichtung der Felge 1 bzw. des Reifens orientiert sein. Bei dieser Ausführungsform können Befestigungsfäden entfallen, da Randstreifen 8 aus Gummi oder dergleichen vorgesehen sind, die an den beiden Randkanten sowohl von oben als auch von unten die Randbereiche der Fäden bzw. des Einzelfadens abdecken und zwischen sich einklemmen. Fig. 6 zeigt hier schematisch die Entstehung dieser Randkantenabdeckung beim Einsatz von Einzelfäden. Die Randstreifen 8 können dabei aus unvulkanisiertem Gummi bestehen und nach dem Zusammenfügen durch Vulkanisation jeweils miteinander und mit den Fäden 17 verbunden werden oder bereits vulkanisiert sein und verklebt werden.

Zusätzlich können bei dieser Ausführungsform, wie es Fig. 5 zeigt, weitere in Umfangsrichtung verlaufende Fäden 9 vorgesehen werden, die dem Gebilde 10' eine leichtere Hantierbarkeit verleihen. Diese Fäden 9 müssen dabei den Fäden 17 jene Beweglichkeit lassen, die für die Montage erforderlich ist, da das Gebilde 10' im Bereich seiner Randstreifen 8 an der Felge 1 befestigt wird. Auch bei dieser Ausführungsform gilt, dass eine entsprechende Anpassung der Dimensionen des Gebildes 10' an diejenigen des Schaumstoffringes 5 bzw. der Felge 1 vorzunehmen ist.

Bei einer weiteren, nicht dargestellten Abwandlung dieser Ausführungsform können die Randstreifen entfallen und das Gebilde bzw. Gewebe unmittelbar an den Randbereichen an der Felge festgeklemmt werden.

Zur Festlegung des Schaumstoffringes 5 an der Felge 1 wird vorerst der Schaumstoffring 5 auf der Felge 1 positioniert, anschließend das Gebilde 10' übergezogen und es werden die Randstreifen 8 oder die Randbereiche ohne diese mittels gesonderten, die Felge 1 umlaufenden Spanneinrichtungen an der Felge 1 fixiert.

Um ein unbeabsichtigtes Verrutschen der Randstreifen 8 und ein Lösen derselben von den Spanneinrichtungen zu verhindern, ist es von Vorteil, wenn in den betreffenden Befestigungsbereichen auf der Felge 1 entweder jeweils eine umlaufende Nut vorgesehen ist oder jeweils ein Gummiprofil 11 aufgebracht, insbesondere aufgeklebt, wird, welches mit einer Nut 11a zur Aufnahme der Randstreifen 8 des Gewebes 10' versehen ist. Dabei ist es von Vorteil, wenn das Gummiprofil 11 bzw. seine Nut 11a so ausgelegt werden, dass auch die Spanneinrichtung in dieser Nut 11a Aufnahme findet. Als Spanneinrichtung kann ein Spannband 12, ein Spannseil oder dergleichen verwendet werden, beispielsweise kann das Aufbringen der erforderlichen Klemmspannung wie von Schlauchschellen oder Palettenbändern her bekannt erfolgen. Dieses Spannband wird vorzugsweise aus Kunststoff bestehen.

Bei dieser Ausführungsform besteht ebenfalls die Möglichkeit, das Gebilde 10' mit dem Schaumstoffring 5 vor der Montage desselben auf der Felge 1 durch Kleben zu verbinden.

Weitere Ausführungsformen der Erfindung sind in Fig. 7 und in Fig. 8 dargestellt. Bei beiden Ausführungsformen ist ein vergleichsweise dicht ausgeführtes, jedoch akustisch transparentes Gewebe 10", 10"' vorgesehen, welches aus miteinander verwobenen Schussfäden 18 und Kettfäden 18' besteht.

Das Besondere am Gewebe 10" sind im Bereich der Ränder in Umfangsrichtung eingewebte schrumpfbare Fäden 16. Als schrumpfbare Fäden 16 eignen sich solche aus PVA (Polyvenylalkoholen), beispielsweise PVA, Type AS, der Firma Unitika, wobei dieses Material infolge Befeuchtens mit Wasser schrumpft. Die PVA-Fäden 16 können auch einen Anteil an Aramidfasern enthalten, um die Beständigkeit der Fäden gegenüber höheren Temperaturen zu verbessern.

Das ringartig zusammengefügte und an den äußeren Durchmesser des Schaumstoffringes angepasste Gewebe 10" wird auf dem bereits auf der Felge aufgebrachten Schaumstoffring positioniert, wobei anschließend die Ränder, die die schrumpfbaren Fäden 16 beinhalten, befeuchtet werden. Das Befeuchten kann auch unmittelbar vor dem Aufbringen des Gewebes 10" durchgeführt werden. Infolge des Befeuchten und des anschließenden Trocknen schrumpfen die Fäden 16 unter gleichzeitigem Spannen des Gewebes 10" so weit, bis die Ränder des Gewebes 10" auf der Felge fest anliegen. Der Schaumstoffring ist somit in seiner Lage auf der Felge festgelegt.

Fig. 8 zeigt eine alternative Ausführungsform mit schrumpfbaren Fäden 14'. Hier sind die schrumpfbaren Fäden 14' nicht in das Gewebe 10"' eingewoben, sondern es ist das Gewebe 10"' an seinen beiden Randbereichen umgeschlagen, wobei die umgeschlagenen Bereiche, beispielsweise durch Vernähen oder Verkleben, wieder mit dem Gewebe 10" verbunden sind und Taschen 15 in den Umschlagbereichen gebildet werden. In die beiden Taschen 15 werden als Spanneinrichtung die schrumpfbaren Fäden 14 eingelegt.

Auch hier wird das Gewebe 10"' mitsamt den Fäden 14 ringartig geschlossen, um über den bereits auf der Felge befindlichen Schaumstoffring gelegt zu werden. Infolge Befeuchtens der Taschen 15 mitsamt den Fäden 14 schrumpfen die Fäden 14 und verringern an den den Rändern des Gewebes 10"' deren Radien. Das Gewebe 10"' wird somit um den Schaumstoffring gespannt. Die Ränder des Gewebes 10"' bzw. die Taschen 15 werden gegen und auf die Felge gezogen, so dass der Schaumstoffring an der Felge fixiert wird.

Es ist auch möglich, das Gewebe selbst zumindest zum Teil aus schrumpfbaren Fäden herzustellen. Die schrumpfbaren Fäden können die Kettfäden und/oder die Schussfäden des Gewebes bilden. Das Gewebe kann ferner so eingesetzt werden, dass schrumpfbare Fäden in Umfangsrichtung und/oder in Querrichtung verlaufen, es kann aber auch so eingesetzt werden, dass schrumpfbare Fäden in diagonaler Richtung verlaufen.

Erwähnt sei femer, dass, je nach Ausführungsform, schrumpfbare Fäden zu Garnen oder Korden zusammengefasst sein können.

Es gibt eine Reihe weiterer Ausgestaltungsmöglichkeiten der Erfindung, die in den Zeichnungsfiguren nicht dargestellt sind. So ist es beispielsweise möglich, den Schaumstoffring zusätzlich an der Felge anzukleben, wobei es in diesem Fall von Vorteil ist, wenn der Schaumstoffring an seiner mit der Felge zu verklebenden Fläche verhautet ist. Zwischen Felge und Schaumstoffring kann darüber hinaus auch eine Schicht aus einem Material mit schlechter thermischer Leitfähigkeit eingebracht werden, um den Schaumstoff vor zu hoher Erwärmung zu schützen. Selbstverständlich wird bei sämtlichen Ausführungsformen darauf geachtet, dass die Geometrie des Schaumstoffringes an die jeweilige Felge bzw. an den zu montierenden Reifen zumindest so weit angepasst wird, dass eine Montage des Reifens auf der Felge möglich ist.

## Patentansprüche

1. Verfahren zum Festlegen eines Ringes aus schallabsorbierendem Material an dem dem Innenraum eines auf einer Felge montierten Reifens zugewandten Umfangsbereich der Felge, **dadurch gekennzeichnet, dass** der Ring (5, 5') aus schallabsorbierendem Material von Fäden (7', 17, 18, 18') umspannt wird, welche seitlich des Ringes (5, 5') in Richtung zur oder an die Felge (1, 1') gespannt werden.

2. Verfahren nach Anspruch 1, **dadurch gekennzeichnet, dass** die Fäden (7', 17, 18, 18') in zumindest im Wesentlichen radialer sowie in axialer Richtung oder, bezüglich der Umfangsrichtung der Felge, bis zur diagonalen Richtung orientiert sind.

3. Kraftfahrzeugrad mit einem auf einer Felge aufgebrachten Reifen, in dessen Innenraum, auf der Felge umlaufend, ein aus schallabsorbierendem Material bestehender Ring untergebracht ist, **dadurch gekennzeichnet, dass** der Ring (5, 5') aus schallabsorbierendem Material mittels ihn umspannenden Fäden (7, 17, 18, 18'), die zu beiden Seiten des Ringes (5, 5') in Richtung zur oder an die Felge (1, 1') gespannt sind, an der Felge (1, 1') festgelegt ist.

4. Kraftfahrzeugrad nach Anspruch 3, **dadurch gekennzeichnet, dass** die Fäden (7', 17, 18, 18') in zumindest im Wesentlichen radialer sowie in axialer Richtung oder, bezüglich der Umfangsrichtung der Felge, bis zur diagonalen Richtung orientiert sind.

5. Kraftfahrzeugrad nach Anspruch 3 oder 4, **dadurch gekennzeichnet, dass** die Fäden (7') die Schussfäden eines Gewebes (10) sind, das im Bereich seiner Ränder jeweils mit zumindest einem Kettfaden versehen ist.

6. Kraftfahrzeugrad nach Anspruch 5, **dadurch gekennzeichnet, dass** die Kettfäden zuziehbare Befestigungsfäden (6), insbesondere aus Kunststoff oder Stahl, sind.

7. Kraftfahrzeugrad nach Anspruch 6, **dadurch gekennzeichnet, dass** die einander zugeordneten Enden der Befestigungsfäden (6) durch Verknoten, Verkleben, Verpressen, Verschweißen, Vernähen oder dergleichen miteinander verbunden sind.

8. Kraftfahrzeugrad nach einem der Ansprüche 5 bis 7, **dadurch gekennzeichnet, dass** die Befestigungsfäden (6) gegen ein Verrutschen aus ihrer Position an der Felge (1) gesichert sind.

9. Kraftfahrzeugrad nach Anspruch 8, **dadurch gekennzeichnet, dass** an der Felge (1) Streifen, Profile oder dergleichen aus Gummi oder Kunststoff angebracht sind.

10. KraftEfahrzeugrad nach Anspruch 8, **dadurch gekennzeichnet, dass** die Felge (1) mit Nuten oder dergleichen zur Aufnahme der Befestigungsfäden (6) versehen ist.

11. Kraftfahrzeugrad nach Anspruch 8, **dadurch gekennzeichnet, dass** die Befestigungsfäden rutschsicher ausgerüstet, insbesondere gummiert, sind.

12. Kraftfahrzeugrad nach Anspruch 3, **dadurch gekennzeichnet, dass** die Fäden (17) beidseitig des Ringes (5) an der Felge (1) festgeklemmt sind.

13. Kraftfahrzeugrad nach Anspruch 12, **dadurch gekennzeichnet, dass** die Fäden (17) in, insbesondere aus Gummi bestehenden, Randstreifen (8) oder dergleichen gehalten sind.

14. Kraftfahrzeugrad nach Anspruch 12 oder 13, **dadurch gekennzeichnet, dass** die Fäden (17) mittels der Randstreifen (8) beidseitig des Ringes (5) an der Felge (1) festgeklemmt sind.

15. Kraftfahrzeugrad nach einem der Ansprüche 12 bis 14, **dadurch gekennzeichnet, dass** die Fäden (17) oder die Randstreifen (8) auf Gummiprofilen (11), die mit der Felge (1) verbunden, insbesondere auf dieser angeklebt, sind, festgeklemmt sind.

16. Kraftfahrzeugrad nach Anspruch 15, **dadurch gekennzeichnet, dass** die Gummiprofile (11) mit umlaufenden Nuten (11a) versehen sind.

17. Kraftfahrzeugrad nach einem der Ansprüche 12 bis 14, **dadurch gekennzeichnet, dass** die Fäden (17) oder die Randstreifen (8) in an der Felge (1) ausgebildeten Nuten festgeklemmt sind.

18. Kraftfahrzeugrad nach einem der Ansprüche 12 bis 17, **dadurch gekennzeichnet, dass** die Fäden (17) oder Randstreifen (8) mittels Spanneinrichtungen, wie spannbaren Bändern oder dergleichen, an der Felge (1) festgeklemmt sind.

19. Kraftfahrzeugrad nach einem der Ansprüche 3 bis 18, **dadurch gekennzeichnet, dass** mit den Fäden (7', 17) zusätzliche, in Umfangsrichtung umlaufende Fäden (9) verwoben sind.

20. Kraftfahrzeugrad nach einem der Ansprüche 3 bis 19, **dadurch gekennzeichnet, dass** die Fäden (7', 17) bzw. das diese aufweisende Gebilde mit dem schallabsorbierenden Ring (5, 5'), vor dem Aufbringen desselben auf die Felge, verklebt werden.

21. Kraftfahrzeugrad nach Anspruch 3 oder 4, **dadurch gekennzeichnet, dass** die Fäden (18, 18') Bestandteile eines dichten, jedoch akustisch transparenten Gewebes (10", 10"') sind.

22. Kraftfahrzeugrad nach einem der Ansprüche 3, 4 oder 21, **dadurch gekennzeichnet, dass** das Gewebe (10", 10"') durch, insbesondere infolge Befeuchtens, schrumpfbare Fäden (14, 16) in Richtung zur oder an die Felge (1, 1') gespannt ist.

23. Kraftfahrzeugrad nach einem der Ansprüche 3, 4, 21 oder 22, **dadurch gekennzeichnet, dass** die schrumpfbaren Fäden (16) zumindest in den Randbereichen des Gewebes (10") in Umfangsrichtung verlaufend eingewoben sind.

24. Kraftfahrzeugrad nach einem der Ansprüche 3, 4, 21 oder 22, **dadurch gekennzeichnet, dass** die schrumpfbaren Fäden (14) in an den in Umfangsrichtung verlaufenden Rändern ausgebildeten Taschen (15) des Gewebes (10"') untergebracht sind.

25. Kraftfahrzeugrad nach einem der Ansprüche 3, 4 oder 22, **dadurch gekennzeichnet, dass** das Gewebe selbst zumindest zum Teil aus schrumpfbaren Fäden gebildet ist.

26. Kraftfahrzeugrad nach einem der Ansprüche 21 bis 25, **dadurch gekennzeichnet, dass** das Gewebe (10", 10"') in ringartig geschlossener Form auf den auf der Felge (1, 1') positionierten schallabsorbierenden Ring (5, 5') aufgebracht ist.

27. Kraftfahrzeugrad nach einem der Ansprüche 21 bis 26, **dadurch gekennzeichnet, dass** die schrumpfbaren Fäden (14, 16) aus PVA bestehen.

28. Kraftfahrzeugrad nach einem der Ansprüche 3 bis 27, **dadurch gekennzeichnet, dass** die sonstigen Fäden (7, 17, 18, 18') aus textilem Material, wie Nylon, Rayon, Polyester oder Aramid, bestehen.

29. Kraftfahrzeugrad nach einem der Ansprüche 3 bis 28, **dadurch gekennzeichnet, dass** der schallabsorbierende Ring (5, 5') ein offenporiger Schaumstoffring ist.

30. Kraftfahrzeugrad nach einem der Ansprüche 3 bis 29, **dadurch gekennzeichnet, dass** der Schaumstoffring (5, 5') einen im Wesentlichen ovalen oder im Wesentlichen halbkreisförmigen Querschnitt besitzt und insbesondere im Bereich seiner Sitzfläche an der Felge (1, 1') der dortigen Felgenkontur angepasst ist.

## Claims

1. Method of securing a ring formed from sound-absorbing material on the circumferential region of the rim facing the interior of a tyre mounted on a rim, **characterised in that** the ring (5, 5'), formed from sound-absorbing material, is gripped by filaments (7', 17, 18, 18'), which are tensioned laterally of the ring (5, 5') in the direction towards or onto the rim (1, 1').

2. Method according to claim 1, **characterised in that** the filaments (7', 17, 18, 18') are orientated in at least substantially the radial direction as well as in the axial direction or, with regard to the circumferential direction of the rim, towards the diagonal direction.

3. Automotive vehicle wheel having a tyre attached to a rim, a ring, formed from sound-absorbing material, being accommodated in the interior of said tyre so as to surround the rim, **characterised in that** the ring (5, 5'), formed from sound-absorbing material, is secured on the rim (1, 1') by means of filaments (7, 17, 18, 18') which grip said ring and are tensioned on both sides of the ring (5, 5') in the direction towards or onto the rim (1, 1').

4. Automotive vehicle wheel according to claim 3, **characterised in that** the filaments (7', 17, 18, 18') are orientated in at least substantially the radial direction as well as in the axial direction or, with regard to the circumferential direction of the rim, towards the diagonal direction.

5. Automotive vehicle wheel according to claim 3 or 4, **characterised in that** the filaments (7') are the weft filaments of a fabric (10), which is provided with at least one warp filament in the region of each of its edges.

6. Automotive vehicle wheel according to claim 5, **characterised in that** the warp filaments are tightenable securing filaments (6), more especially formed from plastics material or steel.

7. Automotive vehicle wheel according to claim 6, **characterised in that** the ends of the securing filaments (6) associated with one another are interconnected by means of knotting, gluing, pressing, welding, sewing or the like.

8. Automotive vehicle wheel according to one of claims 5 to 7, **characterised in that** the securing filaments (6) are prevented from slipping from their position on the rim (1).

9. Automotive vehicle wheel according to claim 8, **characterised in that** strips, profiles or the like, formed from rubber or plastics material, are mounted on the rim (1).

10. Automotive vehicle wheel according to claim 8, **characterised in that** the rim (1) is provided with grooves or the like to accommodate the securing filaments (6).

11. Automotive vehicle wheel according to claim 8, **characterised in that** the securing filaments are provided so as to prevent slipping, more especially they are rubber-coated.

12. Automotive vehicle wheel according to claim 3, **characterised in that** the filaments (17) are securedly clamped on the rim (1) on both sides of the ring (5).

13. Automotive vehicle wheel according to claim 12, **characterised in that** the filaments (17) are retained in edge strips (8) or the like, which are more especially formed from rubber.

14. Automotive vehicle wheel according to claim 12 or 13, **characterised in that** the filaments (17) are securedly clamped on the rim (1) by means of the edge strips (8) on both sides of the ring (5).

15. Automotive vehicle wheel according to one of claims 12 to 14, **characterised in that** the filaments (17) or the edge strips (8) are securedly clamped on rubber profiles (11) which are connected to the rim (1), more especially they are adhered to said rim.

16. Automotive vehicle wheel according to claim 15, **characterised in that** the rubber profiles (11) are provided with circumferential grooves (11a).

17. Automotive vehicle wheel according to one of claims 12 to 14, **characterised in that** the filaments (17) or the edge strips (8) are securedly clamped in grooves provided on the rim (1).

18. Automotive vehicle wheel according to one of claims 12 to 17, **characterised in that** the filaments (17) or edge strips (8) are securedly clamped on the rim (1) by means of tensioning means, such as tensionable bands or the like.

19. Automotive vehicle wheel according to one of claims 3 to 18, **characterised in that** additional filaments (9) which extend in the circumferential direction, are interwoven with the filaments (7', 17).

20. Automotive vehicle wheel according to one of claims 3 to 19, **characterised in that** the filaments (7', 17), or respectively the structure which includes said filaments, are glued with the sound-absorbing ring (5, 5') onto the rim prior to said ring being applied.

21. Automotive vehicle wheel according to claim 3 or 4, **characterised in that** the filaments (18, 18') are component parts of a thick, but acoustically transparent fabric (10", 10"').

22. Automotive vehicle wheel according to one of claims 3, 4 or 21, **characterised in that** the fabric (10", 10"') is tensioned by filaments (14, 16), which are shrinkable more especially as a consequence of wetting, in the direction towards or onto the rim (1, 1').

23. Automotive vehicle wheel according to one of claims 3, 4, 21 or 22, **characterised in that** the shrinkable filaments (16) are woven at least in the edge regions of the fabric (10") so as to extend in the circumferential direction.

24. Automotive vehicle wheel according to one of claims 3, 4, 21 or 22, **characterised in that** the shrinkable filaments (14) are accommodated in cavities (15) of the fabric (10"') provided on the edges extending in the circumferential direction.

25. Automotive vehicle wheel according to one of claims 3, 4, or 22, **characterised in that** the fabric itself is formed at least partially from shrinkable filaments.

26. Automotive vehicle wheel according to one of claims 21 to 25, **characterised in that** the fabric (10", 10"') is applied, in a form which is closed in the manner of a ring, to the sound-absorbing ring (5, 5') positioned on the rim (1, 1').

27. Automotive vehicle wheel according to one of claims 21 to 26, **characterised in that** the shrinkable filaments (14, 16) are formed from PVA.

28. Automotive vehicle wheel according to one of claims 3 to 27, **characterised in that** the other filaments (7, 17, 18, 18') are formed from textile material, such as nylon, rayon, polyester or aramide.

29. Automotive vehicle wheel according to one of claims 3 to 28, **characterised in that** the sound-absorbing ring (5, 5') is an open-pored ring of expanded plastic foam.

30. Automotive vehicle wheel according to one of claims 3 to 29, **characterised in that** the ring of expanded plastic foam (5, 5') has a substantially oval or substantially semicircular cross-section and is adapted, more especially in the region of its seating area, to the rim (1, 1') of the rim contour there.

## Revendications

1. Procédé pour fixer un anneau en matériau absorbant le son sur la zone périphérique d'une jante orientée vers l'espace intérieur d'un pneumatique monté sur la jante, **caractérisé par le fait que** l'on frotte périphériquement, l'anneau (5, 5') en matériau absorbant le son au moyen de fils (7', 17, 18, 18') que l'on tend latéralement par rapport à l'aneau (5, 5') en direction de la jante ou sur la jante (1, 1').

2. Procédé selon la revendication 1, **caractérisé par le fait que** les fils (7', 17, 18, 18') sont orientés au moins sensiblement selon la direction radiale ainsi que selon la direction axiale ou, par rapport à la direction périphérique de la jante, jusque selon la direction diagonale.

3. Roue de véhicule à moteur comportant un pneumatique qui est monté sur une jante et dans l'espace intérieur duquel est logé, de façon à entourer la jante, un anneau constitué d'un matériau absorbant le son, **caractérisé par le fait que** l'anneau (5, 5') en matériau absorbant le son est fixé sur la jante (1, 1') au moyen de fils (7, 17, 18, 18') qui le frettent périphériquement et sont tendus, des deux côtés de l'anneau (5, 5'), en direction de la jante ou sur la jante (1, 1').

4. Roue de véhicule à moteur selon la revendication 3, **caractérisée par le fait que** les fils (7', 17, 18, 18') sont orientés au moins sensiblement selon la direction radiale ainsi que selon la direction axiale ou, par rapport à la direction périphérique de la jante, jusque selon la direction diagonale.

5. Roue de véhicule à moteur selon la revendication 3 ou 4, **caractérisée par le fait que** les fils (7') sont les fils de trame d'une toile (10) qui comporte au moins un fil de chaîne dans la zone de chacune de ses bordures.

6. Roue de véhicule à moteur selon la revendication 5, **caractérisée par le fait que** les fils de chaîne sont des fils de fixation (6) à fermer sur eux-mêmes, en particulier en matière plastique ou en acier.

7. Roue de véhicule à moteur selon la revendication 6, **caractérisée par le fait que** les extrémités des fils de fixation (6) associées l'une à l'autre sont reliées l'une à l'autre par nouage, collage, pressage, soudage, couture ou analogue.

8. Roue de véhicule à moteur selon l'une des revendications 5 à 7, **caractérisée par le fait que** les fils de fixation (6) sont assurés à l'égard d'un glissement hors de leur position sur la jante (1).

9. Roue de véhicule à moteur selon la revendication 8, **caractérisée par le fait que** sur la jante (1) sont montés des bandes, des profilés ou analogues en caoutchouc ou matière plastique.

10. Roue de véhicule à moteur selon la revendication 8, **caractérisée par le fait que** la jante (1) présente des rainures ou analogues pour recevoir les fils de fixation (6).

11. Roue de véhicule à moteur selon la revendication 8, **caractérisée par le fait que** les fils de fixation sont équipés, en particulier enduits de caoutchouc, pour être assurés à l'égard d'un glissement.

12. Roue de véhicule à moteur selon la revendication 3, **caractérisée par le fait que** les fils (17) sont fixés par pincement à la jante (1) des deux côtés de l'anneau (5).

13. Roue de véhicule à moteur selon la revendication 12, **caractérisée par le fait que** les fils (17) sont tenus dans des bandes de bordure (8), constituées en particulier de caoutchouc, ou analogue.

14. Roue de véhicule à moteur selon la revendication 12 bu 13, **caractérisée par le fait que** les fils (17) sont fixés par pincement à la jante (1) des deux côtés de l'anneau (5), au moyen des bandes de bordure (8).

15. Roue de véhicule à moteur selon l'une des revendications 12 à 14, **caractérisée par le fait que** les fils (17) ou les bandes de bordure (8) sont fixés par pincement sur des profilés de caoutchouc (11) qui sont reliés à la jante (1), en particulier collés sur elle.

16. Roue de véhicule à moteur selon la revendication 15, **caractérisée par le fait que** les profilés de caoutchouc (11) comportent des rainures périphériques (11 a).

17. Roue de véhicule à moteur selon l'une des revendications 12 à 14, **caractérisée par le fait que** les fils (17) ou les bandes de bordure (8) sont fixés dans des rainures formées sur la jante (1).

18. Roue de véhicule à moteur selon l'une des revendications 12 à 17, **caractérisée par le fait que** les fils (17) ou les bandes de bordure (8) sont fixés par pincement à la jante (1) au moyen de dispositifs de mise en tension comme des rubans à mettre en tension ou analogue.

19. Roue de véhicule à moteur selon l'une des revendications 12 à 17, **caractérisée par le fait qu'**avec les fils (7', 17) sont tissés des fils supplémentaires (9), continus selon la direction périphérique.

20. Roue de véhicule à moteur selon l'une des revendications 3 à 19, **caractérisée par le fait que** l'on colle les fils (7', 17), ou le produit qui les présente, à l'anneau absorbant le son (5, 5') avant de le monter sur la jante.

21. Roue de véhicule à moteur selon la revendication 3 ou 4, **caractérisée par le fait que** les fils (18, 18') sont des constituants d'un tissu (10", 10"') épais, mais acoustiquement transparent.

22. Roue de véhicule à moteur selon la revendication 3, 4 ou 21, **caractérisée par le fait que** le tissu (10", 10"') est tendu en direction de la jante ou sur la jante (1, 1') au moyen de fils (14, 16) pouvant se rétracter en particulier par suite d'une humidification.

23. Roue de véhicule à moteur selon l'une des revendications 3, 4, 21 ou 22, **caractérisée par le fait que** les fils pouvant se rétracter (16) sont insérés par tissage et de façon continue selon la direction périphérique, au moins dans les zones marginales de la toile (10").

24. Roue de véhicule à moteur selon l'une des revendications 3, 4, 21 ou 22, **caractérisée par le fait que** les fils pouvant se rétracter (14) sont logés dans des poches (15) de la toile (10"') formées sur les bords s'étendant selon la direction périphérique.

25. Roue de véhicule à moteur selon l'une des revendications 3, 4, ou 22, **caractérisée par le fait que** la toile elle-même est formée au moins partiellement de fils pouvant se rétracter.

26. Roue de véhicule à moteur selon l'une des revendications 21 à 25, **caractérisée par le fait que** la toile (10", 10"') est appliquée, sous forme fermée à la façon d'un anneau, sur l'anneau (5, 5') absorbant le son et positionné sur la jante (1, 1').

27. Roue de véhicule à moteur selon l'une des revendications 21 à 26, **caractérisée par le fait que** les fils pouvant se rétracter (14, 16) sont constitués d'acétate de polyvinyle.

28. Roue de véhicule à moteur selon l'une des revendications 3 à 27, **caractérisée par le fait que** les autres fils (7, 17, 18, 18') sont constitués d'un matériau textile comme nylon, rayonne, polyester ou aramide.

29. Roue de véhicule à moteur selon l'une des revendications 3 à 28, **caractérisée par le fait que** l'anneau absorbant le son (5, 5') est un anneau d'un matériau mousse à pores ouverts.

30. Roue de véhicule à moteur selon l'une des revendications 3 à 29, **caractérisée par le fait que** l'anneau en matériau mousse (5, 5') possède une section sensiblement ovale ou sensiblement semi-circulaire et qu'il est adapté, en particulier dans la zone de sa surface d'assise sur la jante (1, 1'), au contour local de la jante.
